Europäisches Patentamt

European Patent Office

Office européen des brevets

(11) Publication number: **0 204 536**
A2

(12) **EUROPEAN PATENT APPLICATION**

(21) Application number: **86304177.8**

(22) Date of filing: **02.06.86**

(51) Int. Cl.⁴: **G 06 F 3/00**

(30) Priority: **03.06.85 US 740411**

(43) Date of publication of application:
**10.12.86 Bulletin 86/50**

(84) Designated Contracting States:
**BE DE FR GB NL**

(71) Applicant: **Monroe, James C.**
**5335 Pacifica Drive**
**San Diego California 92109(US)**

(72) Inventor: **Monroe, James C.**
**5335 Pacifica Drive**
**San Diego California 92109(US)**

(74) Representative: **Wilson, Nicholas Martin et al,**
**WITHERS & ROGERS 4 Dyer's Buildings Holborn**
**London EC1N 2JT(GB)**

(54) Ideographic character processing method.

(57) A complete character is evoked by identifying specific characteristics of selected ones of the strokes forming the character and then looking up those stroke characteristics in a library of stroke characteristics. The stroke characteristics that may be utilized includes stroke shape, stroke size and stroke start position.

EP 0 204 536 A2

# IDEOGRAPHIC CHARACTER PROCESSING METHOD

## BACKGROUND OF THE DISCLOSURE

The Chinese language has no alphabet, is non-linear. It is composed of ideographic "characters". There are in excess of 35,000 characters. Each character defines a unique word. In addition, many Chinese words are formed by combining two (2) or more characters. Each character is formed of a number of strokes, from one (1) to twenty-six (26). There are approximately forty (40) individual stroke shapes, which with size variations account for eighty-two (82) stroke types. (A stroke is defined as a mark or line readily made without lifting a pen or brush from the writing surface.)

In attempting to input and output data from the Chinese language, various methods have been employed to "simplify" this seemingly insurmountable mountain of data into a manageable and "regularized" amount of information.

Historic examples of this drive for simplification are found in the Chinese "simplified characters" where, for instance, a commonly used character may be reduced from twenty (20) strokes to sixteen (16) or eighteen (18). The Chinese telegraphy system, devised almost a century ago, consists of 9,999 characters selected form the entire Chinese language, and assigning each an identifying number. The operator is required to memorize this numeralization. Not only does such a system require a whole new set of information and working knowledge for the operator, but the system is abstract, i.e. there is no connection between the

[MROBPA2]

identifying number and any perceptible characteristic of the intended character itself which might make an easier recognition and classification of characters. Limiting the number of characters fails in proportion to the limitation to impart the nuances, vigor, meaning differences, force, and color of the language; and results in a sophomoric blandness unacceptable for noteworthy communication.

More modern systems have attempted to simply computerize the traditional Chinese dictionary search by "radical" identification. Radicals have been simplified, or reduced in number, in an effort to enhance operator through-put. Although "radicals" are an inherent part of the Chinese written language, all attempts to define every Chinese character by a combination of radicals and other strokes have failed, because the search for the intended character inevitably involves selection from a menu which, while leading to the exact character required, is so tedious, distracting and time-consuming that operator output rarely exceeds twenty (20) to thirty (30) characters per minute, translating at best to ten (10) to fifteen (15) words per minute.

Simplification has also been attempted at the stroke level, reducing the number of "basic" strokes to fourteen (14) or fewer, but the result is more an adaptation of the language to the machine than the machine to the language. This "simplification" usually calls upon the operator to also learn a Roman language, to relearn Chinese according to revised rules of the language, or to memorize and utilize an accompanying code requiring perception and choice selection on the operator's part.

Attempts to phoneticize Chinese have failed because of two insurmountable obstacles: 1) a veritable legion of multiple homonyms, and 2) large groups of people who read and write Chinese via the official Mandarin, but pronounce it quite differently, e.g. the over 300,000,000 Cantonese.

The problems associated with encoding and deciphering Chinese ideographic characters exist to a proportional extent with the Japanese kanji and the equivalent Korean ideographs.

It is therefore desirable to have an ideographic processing method for encoding and decoding ideographic characters and languages which is capable of through-put at speeds comparable to those achieved with Roman word processors and computers, and where such through-put is achievable without:

a) eliminating or altering any characters from the full character spectrum,

b) restricting the capabilities of the language,

c) impoverishing the scope of the language system itself, or

d) the need to learn a foreign language, an abstract code, or complicated procedures.

The Chinese written language has been taught both historically and today in a very structured, formalized and specific manner approaching ritual. Chinese now use, and have from time immemorial used, a training square divided for purpose of learning into sub-squares with each sub-square being further subdivided into 9 sub sub-squares.

Using this basic positional and proportionate guide, characters are taught by stroke, stroke size, stroke

[MROBPA2]

location, stroke order, and stroke number. The result is the fact that all literate Chinese intuitively know, with great specificity, the exact manner and sequence in which each ideographic character is properly formed. Each character has a precise number of strokes written in a specific conventional order each in a unique positional relationship to all the other strokes in the character.

Thus, the literate Chinese knows the number of strokes that form a character, and the exact position - to a one in eighty-one (1:81) precision - where each stroke must begin and end, its identity, shape, and size. The present invention involves a recognition that the same process by which a complex Chinese character is quickly perceived and deciphered in Chinese reading can be utilized to achieve a language processor of extraordinary efficiency.

I have discovered that there is an underlying visual organization principal in all Chinese characters which I call shorthand visual pattern discriminators, and which enable the eye to instantly recognize each known character by means of a gestalt, right hemisphere, function, without the need to visually trace each stroke.

These shorthand visual pattern recognition discriminators are in a most remarkable way superbly fashioned to fully utilize the natural physiology and vision dynamics of the human eye.

The complex eye movements fundamental to vision are well known and clearly described in tests, such as the Encyclopedia Britannica, Volume 7, Eye and Vision, Human more particularly, pages 99-100. (MacroPaedia).

Is is the singular and extraordinary achievement of

MROBPA2]

Chinese character visual organization that utilizes the eye's natural physiology and vision dynamics and functions with an efficiency far surpassing that required by the linear Roman systems.

The universal system of Chinese writing instruction follows and reinforces this remarkable visual encoding and deciphering system.

The shorthand visual pattern discriminators permit instantaneous recognition of each known character, no matter how complex.

While it is easy to see how the eye could recognize simple characters such as 中 without tracing the strokes or engaging in highly involved imagery delineation, but an 11 stroke character 國 or a 24 stroke character 言鸞 presents an apparent maze which appears to be understandable only by involved visual delineation and tedious eye movements.

In practice however, complex characters are as readily recognized as the simplest and require no more time, or eye movement, or visual effort.

Chinese is taught, and has been from time immemorial, by means of strokes, kind, order, number position, and size; all within a square. 册册

I have discovered that by utilizing the means naturally employed by the eye, the written Chinese language can be made amenable to direct computer use and word processing. Using these identification methods, i.e. stroke, number, stroke kind, stroke size, stroke sequence, and stroke position, the natural visual encoding and deciphering process of the eye can be transposed to the computer. The

[MROBPA2]

language may be put into database, divided into character libraries by stroke number, i.e. 1 through 26. These libraries are of different size but none is greater than 3,500 members.

The language may be further divided into stroke order, utilizing the first stroke for example. All of the strokes are further limited, no sub-hierarchy within a given library would have more than 1/7th the total number. Thus in the instance of 3,500 - 500.

Initial stroke position determined by the Chinese learning square and using, for this illustration, the starting point of the initial stroke reduces the library of 500 to less than 175 possible target characters. Within the nine sub-squares, the smaller 9 sub sub-squares which further define the stroke to reduces the 175 possible to less than 90.

Using the same process, with a second stroke, here for example the ultimate stroke, more than 98% of all characters are instantly uniquely identified.

Those characters which are not uniquely defined by such two strokes, (supra), can be typically defined by a third identifying characteristic, such as a third stroke entry (e.g. the second, or penultimate stroke), or the number strokes which comprise the complete character.

The same specific identifying process generally obtains using the type-spatial relationship of any stroke to any other stroke, and encompasses the end position of the strokes as well as the beginning.

SUMMARY OF THE INVENTION

In an exemplary device for the practice of the method,

[ROBPA2]

0204536

a keyboard is provided upon which the operator strikes a key to identify each stroke type, another key to size each stroke, last which comprise the character, a key to identify the number of strokes in the character (1 - 26), and a key defining each first and last stroke start position (1 - 81); this being all the information necessary to specifically identify more than 98% of all characters. This identifying information is entered simultaneously utilizing all ten fingers in a single wrist stroke sequence. The remaining 2% unresolved characters are identified with an additional wrist stroke, which fully defines at least one additional stroke, such as the second or pre-ultimate stroke.

The information thus keyboarded is compared to a stored stroke definition and stroke count register so that the same single character having first and last strokes identical to that keyboarded, and the same total stroke count, will be evoked each and every time the information is input. Keyed to the stored stroke definitions and stroke counts, is the complete definition of each character so that the fully delineated character can be evoked or displayed on a CRT, or other visual display device, or sent to a printer (such as dot matrix, laser, or ink-jet printer). The system lends itself to well-known indexing techniques so that the defined characters are rapidly retrieved permitting virtual instantaneous feedback to indicate a successful match, or in the alternative to signal the operator that more information is needed, e.g. an additional wrist stroke.

The resulting device and method has the advantage of utilizing the traditionally acquired and intuitive knowledge of the language, and the full precision in which literate

[MROBPA2]

Orientals have been schooled and trained, to provide ready and rapid access to the complete character set. A further distinct advantage of the device and method is that no foreign language need be acquired, no strange parochial phonetic system need be learned, no comprise of the full language power, scope, beauty, and effectiveness need be undergone, and no tortured language simplification is dictated.

The keyboard (input-board) taking advantage of the features of the invention permits the necessary data to be input at a rate which substantially exceeds that attainable by a Roman counterpart (sequential) system and operator. In addition, because the device and methods utilize already acquired skills and knowledge, training time is shorter and not as demanding as in a sequential, linear language system.

DETAILED DESCRIPTION OF THE INVENTION

The exemplary embodiment of the invention will be described in conjunction with a device and method specifically adapted for the Chinese language. It will be understood that the invention is equally applicable to other languages with ideographic characters, including Japanese and Korean.

To facilitate description, the Chinese training square, divided into nine sub-squares is labelled as follows: central, north central, south central, north east, central east, south east, north west, central west, and south central.

Since most characters are initiated with a first stroke starting in the north central, north west or west central sub-squares, and end with a stroke starting in the north

MROBPA21

east, east central, south east or south central sub-squares, it is advantageous in many applications to employ the method of first and last stroke combination which, with simultaneous positional input, to completely define and specifically identify all but a very small percentage of the entire Chinese character set.

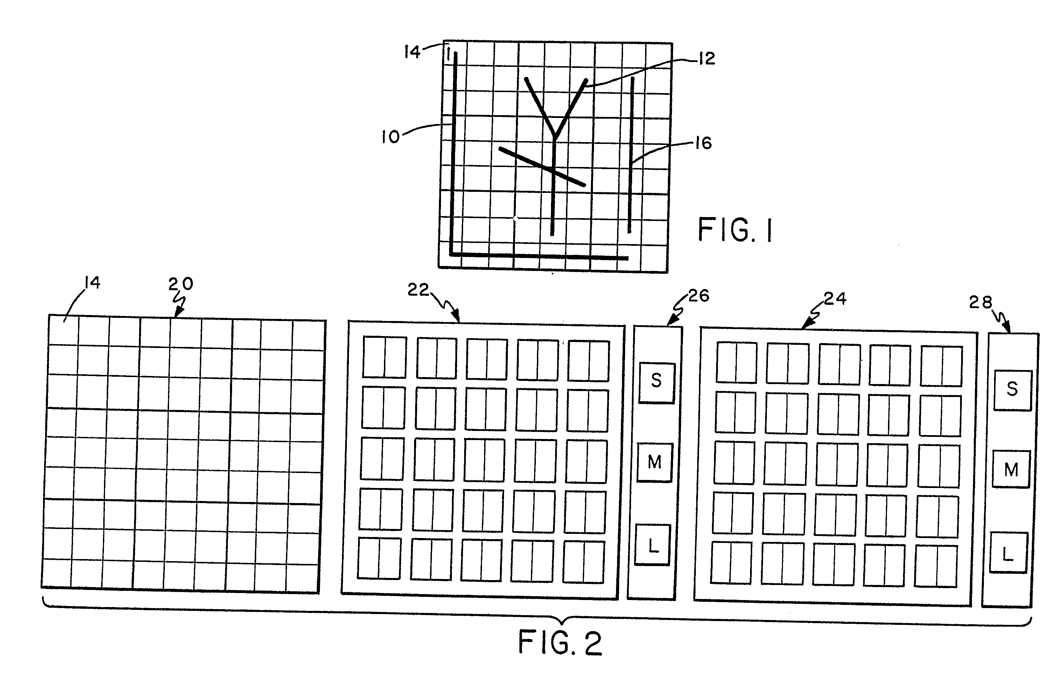

Figure 1 illustrates the classic training square (Nine Square) with an exemplary character which includes a first stroke 10, subsequent strokes 12, and final stroke 6. The character shown is the Chinese ideograph for "bear". The character can be uniquely identified by defining the stroke 10 as 1) starting in a sub sub-square indicated by the numeral 14 (which may be considered sub sub-square 1), and 2) comprising a stroke of an identified type and size (a large right angle); and 3) a final stroke (14) of identified defined as being 4) a vertical stroke of medium size, and lastly 5) by entering the stroke count of 6. By entering information corresponding to these criteria, the character is singularly defined and uniquely identified and then evoked from the entire Chinese character set.

Figure 2 illustrates a keyboard which is exemplary of a keyboard which may be utilized to input the data referred to in Figure 1. The first input element 20 is utilized to indicate the precise start position for the first stroke (sub-square 1 identified by the numeral 14). Two stroke-type keyboards 22 and 24 are provided with each keyboard accommodating the 44 character types with paired keys for left and right hand variations on the characters, a keyboard matrix of 5 by 5 characters can define all 44 characters with a single keystroke. The complete 89 character set is

[MROBPA2]

then defined by selecting from the character size keyboard immediately adjacent to the character type keyboard, keyboard 26 being associated with keyboard 22, and the keyboard 28 being associated with the keyboard 24. By an appropriate arrangement of the several keyboards, and utilizing 1 finger for start stroke position, 1 or 2 for character type, 1 for size; then with a single stroke of both wrists, a complete Chinese character can be defined (single stroke is executed in the manner of a stenotype operator by depressing several keys simultaneously).

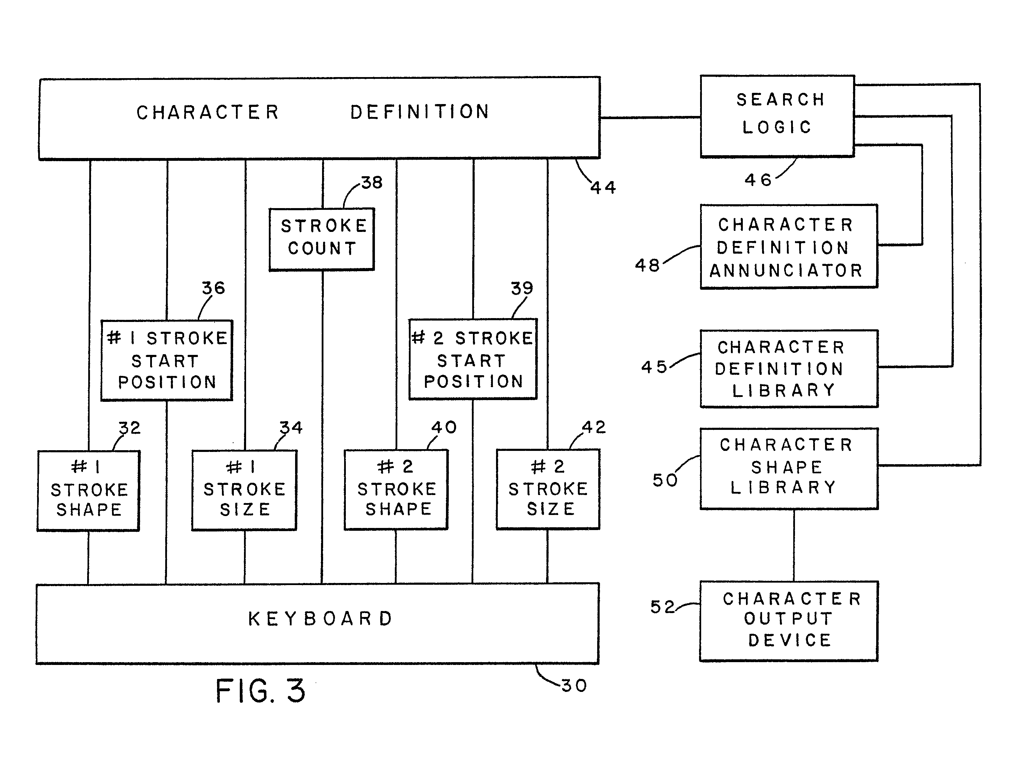

Referring to Figure 3, the basic functional operation of a system utilizing the present method is illustrated. The keyboard in Figure 2 is illustrated diagrammatically as keyboard 30. A series of registers store the keyed information until a complete stroke is executed, and include register 32 for number 1 stroke shape, 34 for number 1 stroke size, 36 for number 1 stroke start position, 38 for stroke count, 40 for number 2 stroke stroke-shape, 42 for number 2 stroke size, and 43 for number 2 stroke start position. When each register has the information entered into it, the information is drawn into the character definition register 44, and inputted in the search logic 46. Search logic refers to a character definition library where the stroke count, first and last stroke start position, and first and last stroke shape and size are indexed together with a number identifying each unique character in the more than 35,000 character set. As soon as the search logic determines that the character definition register contains a number which uniquely identifies a particular 1 of the 25,000 characters, then a signal is output to the character definition annunciator 48 which indicates to the operator that a character has been successfully defined. Where additional strokes are necessary to define the character, then the keys may be struck in the same manner, either immediately or by returning to the character subsequently.

At the same time that the character annunciator is activated the search logic outputs the number corresponding to the identified character shape library 50. The character shape library 50 contains the complete character definition including all the strokes (not just the first and last strokes) for each of the 25,000 characters. The defined character specifics are then output to a character output device 52 which may be a printer, display screen, or similar device for displaying the complete character. The character output device may be utilized during word processing as confirmation that the desired character has been selected, and is utilized during printing to faithfully reproduce each detail of a complete character.

Since the invention has defined shorthand visual pattern discriminators in ideographic languages, their input need not be confined to traditional "key strokes", but may as economically be input through a series of x - y pixel points. The method disclosed herein is adaptable to use of any one of a number of available state of the art pointing devices such as a mouse, joystick, or stylus to replace some or all of the keys. A hand held pixel plate can not only substitute for the described keyboard, but may be utilized to insert Roman characters in Chinese text in a combination Roman-Chinese word processor for the Oriental use, without the need for the user to learn a foreign language, by merely

[MROBPA2]

shifting the device into the non-Chinese mode and tracing the required Roman letters.

Those knowledgeable in the art will readily perceive the application of the described methods to computers and teaching machines. Learning written Chinese, even for those native to the culture, would be immeasurably lightened and broadened with substantial reduction in instruction and application time via instant access to dictionary information in aural and visually displayed form.

The described method, while capable of utilizing the full Chinese character set, functions well with the approximately 11,0000 characters in the simplified character set.

As will be understood, word processing management keys, computer management keys and learning device control, and management keys would be used in conventional or pixel form to achieve the housekeeping-management chores required for vertical and horizontal printing, recall, correction, modification, margin spacing, mode, size, insert, and other arrangement instructions.

~~Having described my invention I now claim:~~

CLAIMS

1.    A method of encoding and decoding ideographic characters formed of multiple strokes, having a known total stroke count; having known characteristics for at least a selected stroke including stroke start position, stroke shape, and together defining a unique stroke definition, wherein the method comprises the steps of:

encoding characters by entering into a storage device for each searchable character a character stroke count, a first stroke start position, a first stroke shape definition, and at least a second stroke shape definition to, without more, uniquely define a substantial majority of all of the ideographic characters in a library of characters; and

decoding ideographic characters by inputing the stroke count, stroke definition, stroke start position, and a second stroke definition,

comparing the identified strokes to stored information in a character definition library; and

identifying a complete ideographic character from said inputted information.

2.    A method of encoding the full range of Chinese characters by means of identification of stroke shape, size, order, and relative position comprising the steps of:

encoding a character by locating the position of the first stroke within a square made up of a matrix of 81 squares, and encoding the stroke shape and size ending at least the last stroke shape and size.

[MROBPA2]

3.    Apparatus for ideographic character discrimination
comprising:

means for uniquely identifying ideographic
characters by providing a signal represenative of a first
stroke type and position and a signal representative of a
least a second stroke type and position and comparing the
signals to a library of stored signals representing the
coresponding strokes in a selected universe of stored
characters to uniquely identify a limited array of
characters having the same stroke characteristics.

4.    A method of evoking a complete ideographic character
definition comprising:

identifying a plurality of specific characteristics of
a first selected stroke, said characteristics being selected
from the group of stroke characteristics comprising stroke
count, and for the selected stroke, stroke shape, stroke
size, stroke sequence, stroke start position, and stroke end
position,

identifying at least one specific characteristic of a
second selected stroke from said group of selected stroke
characteristics,

searching all characters that incorporate the
identified stroke characteristics of said first selected
stroke for characters which also incorporate the specific
characteristic of the second selected stroke to produce an
array comprising one or more characters which include the
specific character to be evoked.

[ROBPA2]

0204536

5.  The method of Claim 4 wherein:

identifying additional stroke characteristic of the character to be evoked, and comparing said additional stroke characteristics to the stroke characteristic of the characters in said array of characters until a single character is uniquely defined.

6.  The method of Claim 5 wherein:

storing the complete character definition of a selected universe of Chinese characters displaying the complete single character evoked.

[MROBPA2]

FIG. 1

FIG. 2

FIG. 3

0204536